# EUROPEAN PATENT SPECIFICATION

(11) **EP 4 272 563 B1**
(45) Date of publication and mention of the grant of the patent: **09.07.2025**
(21) Application number: 22172184.8
(22) Date of filing: 06.05.2022
(51) Int. Cl.: A22C 11/02, B25J 11/00, B25J 15/00, B25J 15/02, B25J 15/08

(54) **GRIPPING DEVICE FOR PICKING UP, CONVEYING AND DELIVERING A SAUSAGE CASING TUBE**
GREIFVORRICHTUNG ZUM AUFNEHMEN, FÖRDERN UND BEREITSTELLEN EINER WURSTHÜLLE
DISPOSITIF DE PRÉHENSION PERMETTANT DE SAISIR, TRANSPORTER ET DÉLIVRER UNE ENVELOPPE DE SAUSISSE

(43) Date of publication of application: 08.11.2023
(73) Proprietor: Poly-clip System GmbH & Co. KG, 65795 Hattersheim (DE)
(72) Inventor: MEYRAHN, Joachim, 64390 Erzhausen (DE); MÜNKER, Udo, 63505 Langenselbold (DE); BABINSKY, André, 51580 Reichshof (DE)
(74) Representative: Eisenführ Speiser

(56) References cited:
- CN-A- 107 696 047
- US-A1- 2022 072 718

## Description

### FIELD OF THE INVENTION

The present invention relates to a gripping device for picking up, conveying and delivering a casing tube such as a casing tube of a sausage and a system for picking up, conveying and delivering a casing tube such as a casing tube of a sausage, which i.a. comprises a delivering bar on which the respective casing tube is stored, a receiving bar on which the respective casing tube is to be inserted, and a transporting apparatus including a handling device and a gripping device.

### BACKGROUND ART

In the practice, it is known that clipping machines for producing sausage-shaped products, like sausages, include a filling tube on which a casing tube is inserted manually by an operating person. Subsequently, the clipping machine operates and produces sausage-shaped products until the inserted casing tube is completely exhausted. After that, the operating person has to insert a new casing tube on the filling tube of the clipping machine, after which the clipping machine starts to operate again.

From US 2022/072718 A1, a gripping device for picking up, transporting and dispensing products, such as foodstuff, is known. The gripper device comprises two gripper members arranged below a base structure, drive means arranged on the upper side of the base structure, and an abutment plate arranged between the base structure and the gripper members. At the ends of the base structure, guide sleeves are arranged, with guide rods guided in said guide sleeves. The guide rods are connected to the gripper members, and are linearly reversibly movable between an open position and a closed position for gripping a product.

CN 107 696 047 A discloses a cucumber picking machine with a gripper and a picking method. The gripper comprises two flexible clamping walls which can be pivoted by means of motors about vertical axes of rotation in order to grip a cucumber to be picked. A cutting cylinder actuates cutting fingers to cut-off the cucumber, which is gripped. The position of the cutting fingers is adjusted via a stepper motor and a spindle. A laser sensor detects the distance of the cucumber to be picked and stops the movement of the gripper.

However, this conventional process leads to several disadvantages that occur particularly during the inserting of a new casing tube on the filling tube of the clipping machine. As the process of inserting a new casing tube one the filling tube is done by an operating person, operating errors can occur such as inserting problems. In particular, a non-rigid casing tube is hard to insert on the filling tube, as the casing tube tends to bend and is easy to damage. Further, there is a risk that the operating person gets his fingers or the like caught in the machine, which could lead to injuries. In sum, the conventional process of manually inserting a casing tube on a filling tube is time-consuming, dangerous and complex, wherein longer machine downtimes can occur due to incorrect insertion, resulting in increased costs.

It is an objective of the present invention to reduce the risk of injuries to an operating person during an operating process and to reduce the time required for inserting a casing tube on a filling tube. In addition, it is a further objective of the present invention to prevent damages on the casing tube, while inserting the same on the filling tube.

### SUMMARY OF THE INVENTION

The objective is achieved by a gripping device for picking up, conveying and delivering a casing tube such as a casing tube of a sausage as defined in independent claim 1 as well as a system for picking up, conveying and delivering a casing tube such as a casing tube of a sausage pursuant to claim 10. Further, developments of the present invention are defined in the dependent claims.

A device solving the aforesaid drawbacks is defined in independent device claim 1, wherein dependent claims 2 through 8 provide further developments of that device. In addition, a system overcoming the aforesaid problems is defined in independent system claim 9, wherein dependent claims 10 through 15 provide further developments of that system.

According to a first aspect, a gripping device for picking up, conveying and delivering a casing tube or tubular casing material such as a casing tube of a sausage, the gripping device comprises: a longitudinal base structure which is attached to a handling device by means of a coupling element, preferably in a non-destructively detachable manner, at least two gripper members having each at least one bottom surface and at least one top surface, wherein the gripper members of the gripping device are provided with gripping surfaces, at least two drive means, which are attached to the axial ends of the base structure, for reversibly moving the gripper members between a first position in which the gripper members are positioned on opposite sides of the casing tube to be picked up, and a second position in which the gripper members seize the casing tube to be picked up, and a control unit for simultaneously driving the drive means of the gripper members. The drive means are driven pneumatically, and the drive means are supplied by means of a compressed air supply via a common valve and respective conduits. Furthermore, a respective flow restrictor is connected to the drive means for compensating unsynchronized movements during opening and closing of the gripper members by the drive means.

The use of a gripping device makes it possible to completely automate the process of picking up a casing tube from a delivering bar, conveying said casing tube and delivering said casing tube on a receiving bar. Thus, the risk of injuries to an operating person during an operating process is reduced. Further, the time required for inserting a casing tube is reduced significantly. In addition, due to the constant gripping process of an automated gripping device, it is possible to prevent damages on the casing tube, while inserting the same.

According to this, it is possible to drive the drive means on respective ends of the base structure of the gripping device simultaneously. Further, only one compressed air supply is need due to the fact that the common valve distributes the air flows to the drive means.

Due to the long distance between the drive means and simultaneously driving of said drive means, the flow restrictors are advantageous to compensate irregular pressures delivered to the drive means.

In order to ensure that substantially the same air pressure arrives at the respective drive means, it is further advantageous if the conduits from the common valve to the respective drive means are substantially of the same length. By doing this, unsynchronized movements of the gripper members can be avoided.

In some embodiments, the respective flow restrictor 130 is connected to the inflow ends and outflow ends of drive means 126a, 126b.

In some embodiments of the gripping device, at least one of the gripper members is translatory and/or rotatory movable with respect to the base structure. Due to the translatory and/or rotatory movable gripper members, it is possible to pick up products at points that are not easily accessible since the width of the gripping device can be reduced. This may be realized, for example, by means of rotatory supported gripper members which may be reversibly opened and closed in a scissor-like manner, necessitating a small gripper opening width in order to seize the product.

In some embodiments of the gripping device, each of the gripper members is guided by at least two guide rods. According to this, it can be ensured that the gripper members are guided translatory.

In order to ensure that the gripper members have contact with the casing tube to be picked up, it is advantageous that at least one of the gripper members comprises a detection means which is capable of detecting the contact of the casing tube, wherein preferably two opposing gripper members comprise each a detection means.

In some embodiments of the gripping device, the drive means are connected to the gripper members via at least one connecting bracket having preferably a curved shape.

In some embodiments of the gripping device, the base structure and/or the at least two gripper members comprise a plurality of through holes and oblong holes for reducing the weight of the gripping device. By doing this, the weight of the gripping device can be reduced, significantly.

According to a preferred embodiment of the inventive gripping device, the gripper members are interchangeable with other gripper members, i.e. smaller or larger ones or gripper members having a different shape or structure. Preferably, the gripper members are attached to the brackets of the drive means via screws. More preferably, the gripper members are attached to the brackets of the drive means via a bayonet lock, which is openable and closeable without any tools.

According to a second aspect, a system for picking up, conveying and delivering a casing tube such as a casing tube of a sausage, the system comprises: a delivering bar on which the respective casing tube is stored, a receiving bar on which the respective casing tube is to be inserted, and a transporting apparatus including a handling device and a gripping device for conveying the casing tube from the delivering bar on the receiving bar.

In some embodiments of the system for picking up, conveying and delivering a casing tube such as a casing tube of a sausage, the system further comprises at least one magazine including a plurality of delivering bars, wherein the at least one magazine is mounted on a framework, wherein preferably two magazines are arranged on the framework opposite to each other.

In some embodiments of the system for picking up, conveying and delivering a casing tube such as a casing tube of a sausage, the framework is rotatable and configured to rotate the at least one magazine in a picking up position and a loading position, respectively.

In some embodiments of the system for picking up, conveying and delivering a casing tube such as a casing tube of a sausage, the at least one magazine comprises a plurality of substantially vertical delivering bars, wherein preferably the delivering bars are arranged in a circle with a predefined distance to each other.

In some embodiments of the system for picking up, conveying and delivering a casing tube such as a casing tube of a sausage, the at least one magazine is rotatable and configured to rotate one of the delivering bars in a picking up position.

In some embodiments of the system for picking up, conveying and delivering a casing tube such as a casing tube of a sausage, the gripping device of the transporting apparatus is configured to pick up a casing tube from the delivering bar and to deliver said casing tube on the receiving bar which is a filling tube of a clipping machine.

Preferably, the transporting apparatus is attached to the clipping machine, preferably on a back plate of the clipping machine or on a top plate of the clipping machine. Further, it is advantageous, if the transporting apparatus is attached behind the clipping machine. Due to this, the range of the transporting apparatus can be well utilized, as the transporting apparatus does not have to grip over the clipping machine. Furthermore, this significantly shortens the travel paths of the transporting apparatus.

There is further disclosed a filling tube assembly of a clipping machine for producing sausage-shaped products, like sausages, by filling a filling material into a tubular packaging casing, the filling tube assembly comprising: a revolver plate, which is rotatable about a rotation axis, at least a first filling tube and a second filling tube, each having a central axis, wherein the filling tubes are mounted on the revolver plate, at least a first casing brake assembly and a second casing brake assembly, wherein the first casing brake assembly is connected to the first filling tube and the second casing brake assembly is connected to the second filling tube, and a drive device for rotating the revolver plate including the filling tubes about the rotation axis, wherein the central axis of the first filling tube and the central axis of the second filling tube define an angle larger than 0°, preferably between 15° and 75°, and more preferably between 30° and 60°.

Preferably, the first casing brake assembly is associated with the first filling tube and includes a first casing brake unit positioned in the region of a first end of the first filling tube, and is pivotally coupled to the revolver plate by a first telescopic casing brake holder unit, and the second casing brake assembly is associated with the second filling tube and includes a second casing brake unit positioned in the region of a first end of the second filling tube, and is pivotally coupled to the revolver plate by a second telescopic casing brake holder unit.

Preferably, the first casing brake unit is linearly reversibly shiftable along the first filling tube onto its first end and pivoted away from the first end of the first filling tube, and the second casing brake unit is linearly reversibly shiftable along the second filling tube onto its first end and pivoted away from the first end of the second filling tube.

Preferably, the first casing brake holder unit includes a telescopic guidance and a telescopic drive for extending and retracting telescopic guidance, and the second casing brake holder unit includes a telescopic guidance and a telescopic drive for extending and retracting telescopic guidance.

Preferably, the telescopic drives are linear drives, particularly, piston/cylinder drives.

Preferably, the filling tube assembly further comprises a first pivot drive unit, which is provided for pivoting the first casing brake assembly relative to the first filling tube about a pivot point at which the first casing brake assembly is coupled to the revolver plate, and the filling tube assembly further comprises a second pivot drive unit, which is provided for pivoting the second casing brake assembly relative to the second filling tube about a pivot point at which the second casing brake assembly is coupled to the revolver plate.

Preferably, the filling tube assembly is mounted on a framework via a joint portion.

Preferably, the joint portion is mounted on a side wall of the framework.

Preferably, the filling tube assembly is linearly and/or rotatably shiftable such that the filling tube is positioned in front of the clipping machine.

Preferably, a feeding socket is fixed to the revolver plate and facing away from the clipping machine, wherein feeding socket is coaxially aligned with the central axis of the filling tube.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly as mentioned above, gathering means for gathering the filled tubular packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, a discharge device for discharging the sausage-shaped product just produced out of the clipping machine, and a control unit for controlling at least the clipping machine and the robotic device.

Preferably, the robotic device includes: a gripper unit for gripping a tubular packaging casing supply provided by the storage device, and for transferring said tubular packaging casing supply onto the at least first filling tube of the clipping machine; and a control unit for controlling at least the gripper unit.

Preferably, the storage device includes: at least a first storage assembly in which at least one tubular packaging casing supply is provided for being transferred by the robotic device onto the at least first filling tube of the clipping machine.

Preferably, the first filling tube is movable between a filling position, in which filling material is fed through the first filling tube into the tubular packaging casing stored on the first filling tube, and a refill position, in which a tubular packaging casing supply is transferred onto the first filling tube.

There is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least first filling tube, and transferring by the robotic device a tubular packaging casing supply provided by a storage device onto the at least first filling tube being arranged in the refill position.

There is further disclosed a magazine for providing at least one tubular-shaped packaging casing suitable for receiving a flowable filling material in the production of sausage-shaped products, in particular sausages, comprising: at least one mandrel for holding at least one packaging casing, wherein the at least one mandrel has a longitudinal mandrel axis, and wherein the at least one mandrel comprises a free end at a first mandrel end, and a conveyor for holding at least one mandrel in an upright position, wherein the conveyor conveys the at least one mandrel from a loading position to a delivery position.

Preferably, at least one retaining element is provided wherein the retaining element is arranged at least at the proximity of the first mandrel end for releasably retaining the packaging casing on the at least one mandrel.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the longitudinal mandrel axis is oriented at least approximately vertically or forms an acute angle with the vertical line.

Preferably, the conveyor is a circulating conveyor belt driven by a motor, wherein the conveyor belt is preferably arranged in an oval configuration.

Preferably, the at least one mandrel has a second mandrel end spaced apart from the first mandrel end along the longitudinal mandrel axis and is attached to a respective mandrel carrier means positioned on the conveyer.

Preferably, the at least one mandrel comprises at least one support element for supporting the packaging casing, the at least one support element is preferably reversibly adjustable in its position along the mandrel.

Preferably, the conveyor is inclined in its longitudinal axis.

Preferably, the at least one retaining element is held by holding means coupled by a shaft to the mandrel carrier means for supporting the holding means and transmitting forces from the mandrel carrier means to the holding means.

Preferably, the carrier means are holding the mandrel, the shaft and the holding means.

There is further disclosed a production system, in particular a clipping machine, for filling and closing a tubular or bag-shaped packaging casing to produce sausage-shaped products, in particular sausages, comprising: at least one magazine as mentioned above, and a robot to pick-up a packaging casing provided at the magazine and to place it at a filling unit.

Preferably, the loading position and the delivery position of the conveyor is separated by a separating wall, wherein the separating wall includes at least one window for passing the conveyor including the at least one mandrel.

Preferably, the separating wall includes at least one sensor to monitor the at least one window of the separating wall for unexpected movements such as a hand of an operator.

Preferably, the at least one sensor is switched off while a mandrel is passing the window of the separating wall.

There is further disclosed a magazine for providing at least one tubular-shaped packaging casing suitable for receiving a flowable filling material in the production of sausage-shaped products, in particular sausages, comprising: a longitudinal magazine axis, at least one mandrel for holding at least one packaging casing, wherein the at least one mandrel has a longitudinal mandrel axis, which extends at least approximately parallel to the longitudinal magazine axis, and wherein the at least one mandrel comprises a free end at a first mandrel end, and at least one retaining element arranged at least at the proximity of the first mandrel end for releasably retaining the packaging casing on the at least one mandrel.

Preferably, the longitudinal magazine axis is oriented at least approximately vertically.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the at least one mandrel has a second mandrel end spaced apart from the first mandrel end along the longitudinal mandrel axis and is attached to mandrel carrier means.

Preferably, the mandrel carrier means are rotatable around the longitudinal magazine axis.

Preferably, the at least one retaining element is held by holding means coupled by a shaft to the mandrel carrier means for supporting the holding means and transmitting forces from the mandrel carrier means to the holding means.

Preferably, the mandrel carrier means have a first diameter and the holding means have a second diameter, and wherein the first diameter is greater than the second diameter.

Preferably, the at least one mandrel is arranged at the mandrel carrier means along a circular ring that is perpendicular to the magazine axis.

Preferably, the circular ring has a ring diameter, and the first diameter is greater than the ring diameter and/or the ring diameter is larger than the second diameter.

Preferably, the at least one mandrel comprises at least one support element for supporting the packaging casing, the at least one support element is preferably reversibly adjustable in its position along the mandrel.

There is further disclosed a revolver comprising at least two magazines as mentioned above, wherein the at least two magazines are arranged on revolver carrier means, which are rotatable around a revolver axis extending at least approximately parallel to the longitudinal magazine axis.

Preferably, the revolver carrier means have at least a first position in which one magazine is arranged in a delivery position and at least a second position in which the further magazine is arranged in a feeding position.

Preferably, comprising at least one separating wall for separating the first position from the second position.

There is further disclosed a production machine, in particular a clipping machine, for filling and closing a tubular or bag-shaped packaging casing to produce sausage-shaped products, in particular sausages, comprising: at least one magazine as mentioned above and/or at least one revolver as mentioned above, and a robot to pick-up a packaging casing provided at the magazine and/or at the revolver and to place it at a filling unit.

There is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided preferably with at least a first filling tube and preferably a second filling tube and a first and preferably a second casing brake assembly, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a first gripper unit for gripping a tubular packaging casing supply and a second gripper unit for gripping the first casing brake assembly, the method comprises the steps of: removing the casing brake assembly from the filling tube by the second gripper unit; moving the robotic device into a take-up position for taking up by the first gripper unit a tubular packaging casing supply provided in a storage device; gripping the tubular packaging casing supply provided in a storage device by the first gripper unit; moving the robotic device from the take-up position toward the filling tube; transferring the tubular packaging casing supply onto the filling tube by the first gripper unit; releasing the tubular packaging casing supply onto the filling tube of the clipping machine by the first gripper unit, and positioning the casing brake assembly on the filling tube by the second gripper unit.

Preferably, the method further comprises the step of exchanging a first gripper unit of robotic device, for gripping a tubular packaging casing supply by a second gripper unit for gripping the at least first casing brake assembly, for reversibly removing the first casing brake assembly from the at least first filling tube.

Preferably, the method further comprises the step of securing the tubular packaging casing supply on the first filling tube by at least one retainer device.

Preferably, the robotic device includes at least a first sensor unit associated with the first gripper unit, for detecting the position of the gripper unit relative to the tubular packaging casing supply in the storage device and/or for detecting the position of the gripper unit relative to the filling tube.

Preferably, the first gripper unit at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the first gripper unit along a predefined moving path towards the filling tube of the clipping machine.

Preferably, the method further comprises the step of positioning the first gripper unit with its gripping axis coaxially to the central axis of the filling tube and in front of the filling tube; and shifting the tubular packaging casing supply onto the filling tube by the first gripper unit.

Preferably, the method further comprises the step of detecting by the first sensor unit the position of the tubular packaging casing supply on the filling tube; and releasing the tubular packaging casing supply onto the filling tube.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material may be fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the first gripper unit includes at least one further sensor unit for detecting the position of the gripper elements.

There is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least at least a first filling tube and preferably a second filling tube onto each of which a packaging casing supply can be applied; a robotic device for transferring a packaging casing supply from the storage device onto a filling tube of the clipping machine, and having at least a first griper unit for gripping a tubular packaging casing supply, and a second gripper unit for gripping a casing brake assembly of the clipping machine; and a control unit for at least partially controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

There is further disclosed a robotic device including a gripper unit and arranged in a system for producing sausage-shaped products as mentioned above and controlled by the method as mentioned above.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly having at least a first filling tube for feeding the filling material into the tubular packaging casing stored on the filling tube and being closed at its first end, at least a first casing brake assembly, associated with the first filling tube, for applying a braking force to the tubular packaging casing while being pulled-off from the first filling tube, and a control unit for controlling at least the clipping machine, the robotic device includes: at least a first gripper unit for gripping a tubular packaging casing supply provided by the storage device, and for transferring said tubular packaging casing supply onto the at least first filling tube of the clipping machine; and at least a second gripper unit for gripping the at least first casing brake assembly, for reversibly removing the at least first casing brake assembly from the at least first filling tube; and the storage device includes: at least a first storage assembly in which at least one tubular packaging casing supply is provided for being transferred by the robotic device onto the at least first filling tube of the clipping machine.

Preferably, a receiving device is provided for at least temporarily receiving the first and/or the second gripper unit, wherein, preferably, the receiving device is provided at the clipping machine.

Preferably, the receiving device includes at least a first holding unit and a second holding unit for at least temporarily accommodating the first and/or second gripper unit.

Preferably, at least one retainer device is provided for temporarily securing the tubular packaging casing supply on the first filling tube in the refill position.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the first gripper unit relative to the storage device and/or the position of the first gripper unit relative to the first and/or second filling tube arranged in the refill position.

Preferably, the robotic device includes a second sensor unit for determining a gripping force applied to the tubular packaging casing supply by the first gripper unit.

Preferably, the storage device includes at least a third sensor unit for detecting the presence or absence of a tubular packaging casing supply in the storage device.

Preferably, the system further including a hanging line arranged downstream the discharge device, for suspending the sausage-shaped products discharged from the clipping machine by the discharge device onto a rod-like element, like a smoking rod, the hanging line includes a control unit for controlling at least the hanging line, wherein, preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

There is further disclosed a method for producing sausage-shaped products in a system as mentioned above, the method comprises the steps of: producing a sausage-shaped product by a clipping machine having an at least first filling tube onto which a tubular packaging casing is stored into which filling material is fed, the method further comprises the steps of: moving the at least first filling tube from a filling position, in which filling material is fed into the tubular packaging casing, into a refill position, in which a tubular packaging casing supply is transferred onto the at least first filling tube, removing by the robotic device a first casing brake assembly from the at least first filling tube being in the refill position, and transferring by the robotic device a tubular packaging casing supply provided by a storage device onto the at least first filling tube being arranged in the refill position.

Preferably, the method further comprises the step of positioning by the robotic device the first casing brake assembly onto the at least first filling tube.

Preferably, the method further comprises the step of exchanging a first gripper unit of the robotic device, for gripping a tubular packaging casing supply by a second gripper unit for gripping the at least first casing brake assembly, for reversibly removing the first casing brake assembly from the at least first filling tube.

Preferably, the method further comprises the step of suspending the sausage-shaped product discharged by the discharge device on a rod-like element provided by the hanging line, wherein, preferably, the clipping machine controls at least partially the robotic device and/or the hanging line.

There is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided with at least two filling tubes, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a gripper unit for gripping a tubular packaging casing supply, the method comprises the steps of: moving the robotic device into a take-up position for taking up by the gripper unit a tubular packaging casing supply provided in a storage device; gripping the tubular packaging casing supply provided in a storage device by the gripper unit; moving the robotic device from the take-up position toward the filling tube; transferring the tubular packaging casing supply onto the filling tube by the gripper unit; and releasing the tubular packaging casing supply onto the filling tube of the clipping machine by the gripper unit.

Preferably, the robotic device includes at least a first sensor unit associated with the gripper unit, for detecting the position of the gripper unit relative to the tubular packaging casing supply in the storage device and/or for detecting the position of the gripper unit relative to the filling tube.

Preferably, the gripper unit includes at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the gripper unit along a predefined moving path towards the filling tube of the clipping machine.

Preferably, the method further comprises the step of position the gripper unit with its gripping axis coaxially to the central axis of the filling tube and in front of the filling tube; and shifting the tubular packaging casing supply onto the filling tube by the gripper unit.

Preferably, the method further comprises the step of detecting by the first sensor unit the position of the tubular packaging casing supply on the filling tube; and releasing the tubular packaging casing supply onto the filling tube.

Preferably, filling tube of the clipping machine is provided with a casing brake assembly, the method further comprises the step of: positioning the casing brake assembly in front of the filling tube after the tubular packaging casing supply has been shifted onto the filling tube and prior the tubular packaging casing supply has been released onto the filling tube by the gripper unit.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material is fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the gripper unit includes at least one further sensor unit for detecting the position of the gripper elements.

There is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least two filling tubes onto each of which a packaging casing supply can be applied; a robotic device for transferring a packaging casing supply from the storage device onto a filling tube of the clipping machine; and a control unit for controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the first filling tube is provided with a first casing brake unit reversibly removable from the first filling tube and the second filling tube is provided with a second casing brake unit reversibly removable from the second filling tube, and wherein the control unit is configured to release the tubular packaging casing supply fed to the filling tube located in the refilling position when the respective casing brake unit is positioned in front of the filling tube shortly before being pushed onto the latter.

According to the present invention, there is further disclosed a robotic device including a gripper unit and arranged in a system for producing sausage-shaped products as mentioned above and controlled by the method as mentioned above.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply, the clipping machine comprises: a filling tube assembly having at least a first filling tube for feeding the filling material into the tubular packaging casing stored on the filling tube and closed at its first end, at least a first casing brake assembly, associated with the first filling tube, for applying a braking force to the tubular packaging casing while being pulled-off from the first filling tube, and a control unit for controlling at least the clipping machine, the robotic device includes: a gripper unit for gripping a tubular packaging casing supply provided by the storage device, and for transferring said tubular packaging casing supply onto the at least first filling tube of the clipping machine; the storage device includes: at least a first storage assembly in which at least one tubular packaging casing supply is provided for being transferred by the robotic device onto the at least first filling tube of the clipping machine.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the gripper unit relative to the storage device and/or the position of the gripper unit relative to the first and/or second filling tube arranged in the refill position.

Preferably, the robotic device includes a second sensor unit for determining a gripping force applied to the tubular packaging casing supply by the gripper unit.

Preferably, the storage device includes at least a third sensor unit for detecting the presence or absence of a tubular packaging casing supply in the storage device.

Preferably, the system further includes a hanging line arranged downstream the discharge device, for suspending the sausage-shaped products discharged from the clipping machine by the discharge device onto a rod-like element, like a smoking rod, the hanging line includes a control unit for controlling at least the hanging line.

Preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

There is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least fist filling tube, and transferring by the robotic device a tubular packaging casing supply provided by a storage device onto the at least first filling tube being arranged in the refill position.

Preferably, the method further comprises the step of suspending the sausage-shaped product discharged by the discharge device on a rod-like element provided by the hanging line.

Preferably, the method further comprises the step of least partially controlling by the clipping machine the robotic device and/or the hanging line.

Further advantages and preferred embodiments of the present invention will be described in the following together with the drawings listed below. The expressions "left", "right", "below" and "above" used in the following description are referred to the drawings in an alignment such that the reference numbers and the notation of the figures used can be read in normal orientation.

It shall be understood that a preferred embodiment of the present invention can also be any combination of the dependent claims or above embodiments with the respective independent claim falling within the scope of the claims.

### BRIEF DESCRIPTION OF THE DRAWINGS

- Fig. 1: shows a top view of a system for picking up, conveying and delivering a casing tube according to an embodiment of the present invention.
- Fig. 2: shows a perspective view of the system depicted in Fig. 1 showing the travel path of a transporting apparatus.
- Fig. 3: shows a perspective view of the system depicted in Fig. 2 showing the transporting apparatus in a first position.
- Fig. 4: shows a perspective view of the system depicted in Fig. 2 showing the transporting apparatus in a second position.
- Fig. 5: shows a perspective view of the system depicted in Fig. 2 showing the transporting apparatus in a third position.
- Fig. 6: shows a perspective view of a gripping device of the system depicted in Figs. 3 to 5 in an opened position.
- Fig. 7: shows a perspective view of the gripping device of the system depicted in Figs. 3 to 5 in a closed position.
- Fig. 8: shows a pneumatic plan of the gripping device depicted in Figs. 6 and 7.

### DETAILED DESCRIPTION

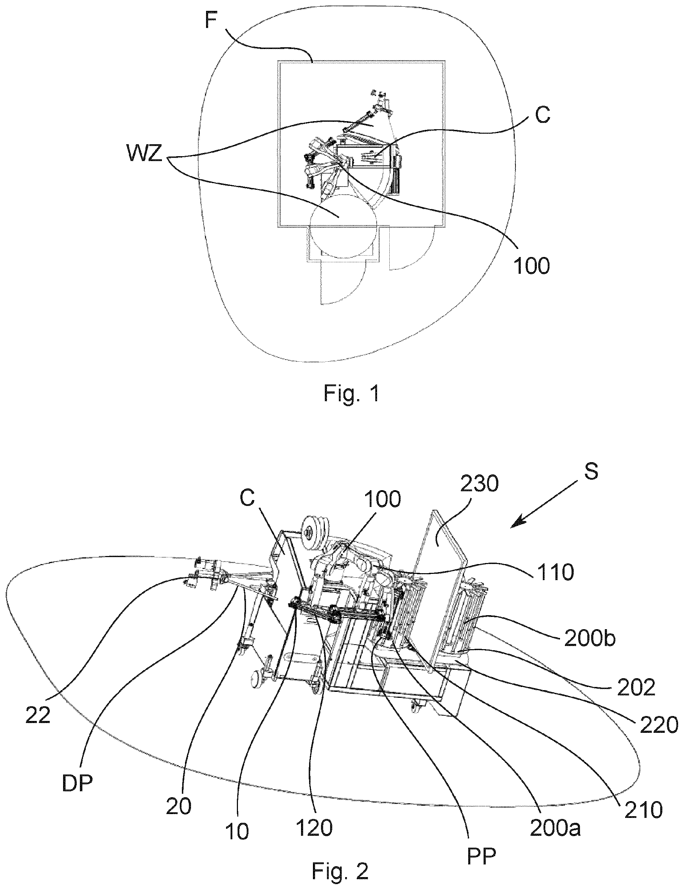

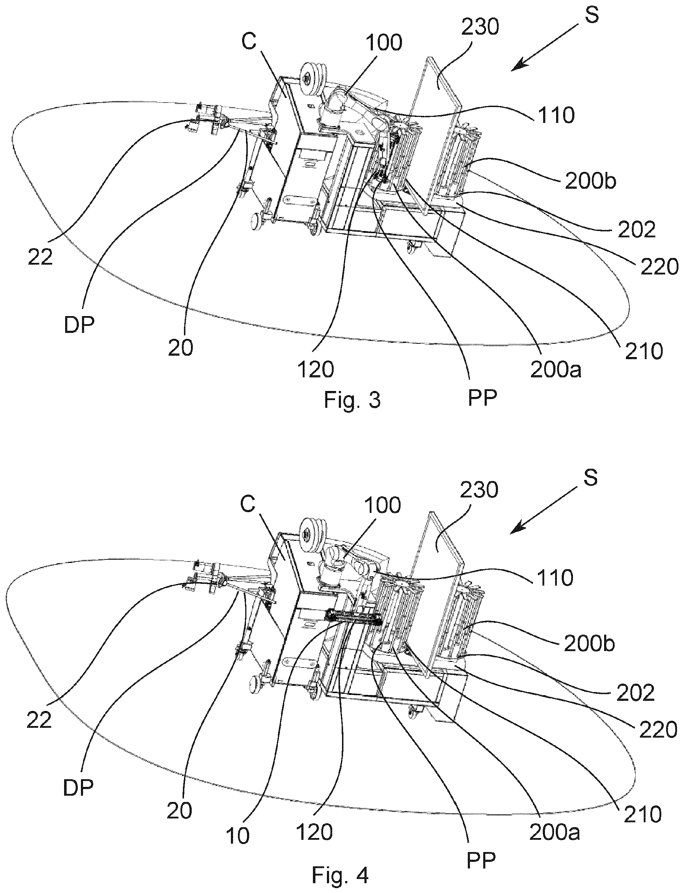

Figs. 1 and 2 show a top view and a perspective view of a system S for picking up, conveying and delivering a casing tube or tubular casing material 10 via a transporting apparatus 100 on a filling tube 20 of a clipping machine C according to an embodiment of the present invention. Furthermore, system S is surrounded by a protective fence F, which has a protective gate corresponding to a loading position LP of casing tubes 10. In Figs. 1 and 2, transporting apparatus 100 is shown in motion from a picking up position PP to a delivering position DP. Furthermore, in Fig. 1 there are shown working zones WZ of filling tube 20 and magazine 200 of casing tube 10, which will be explained in detail with reference to Figs. 3 to 5.

Clipping machine C comprises filling tube 20 through which sausage meat is filled into casing tube 10, which is inserted on filling tube 20. In the present embodiment, clipping machine C comprises three filling tubes 20, where two or only one filling tube 20 would also be possible, which are mounted to a base segment 22. Filling tubes 20 are configured to rotate from a working position, in which casing tubes 10 on filling tubes 20 are filled with sausage meat, and a delivering position, in which a casing tube 10 is inserted on filling tube 20.

Figs. 3 to 5 show different positions of transporting apparatus 100. As depicted in Fig. 3, transporting apparatus picks up a casing tube 10 from a bar 210 of a magazine 200.

Magazine 200 is arranged on a side of clipping machine C and mounted on a rotatable framework 220. In the present embodiment, there are arranged two magazines 200a, 200b opposite to each other on framework 220 separated by a safety wall 230.

Each magazine 200a, 200b consists of a horizontal base 202 and a plurality of substantially vertical bars 210, which are arranged in a circle on base 202 with a predefined distance to each other. Magazines 200a, 200b are rotatable about its respective central axes to allow transporting apparatus 100 to pick up a respective casing tube 10 from respective bar 210.

First magazine 200a is positioned in a picking up position PP, in which transporting apparatus 100 picks up casing tubes 10 from bars 210 of first magazine 200a. Second magazine 200b is positioned in a loading position, in which casing tubes 10 are inserted on bars 210 by an operating person or another transporting apparatus (not shown). After transporting apparatus 100 has picked up and delivered all casing tubes 10 of first magazine 200a and second magazine 200b is full of casing tubes 10, framework 220 rotates until second magazine 200b reaches the picking up position PP and first magazine 200a reaches the loading position. In this particular case, framework 220 rotates by 180°.

Transporting apparatus 100, which in the present embodiment is arranged on top of clipping machine C, consists of a handling device 110 and a gripping device 120 for conveying casing tube 10 from bar 210 of magazine 200 on filling tube 20 of clipping machine C. In the present embodiment, handling device 110 is a six-axis jointed-arm robot.

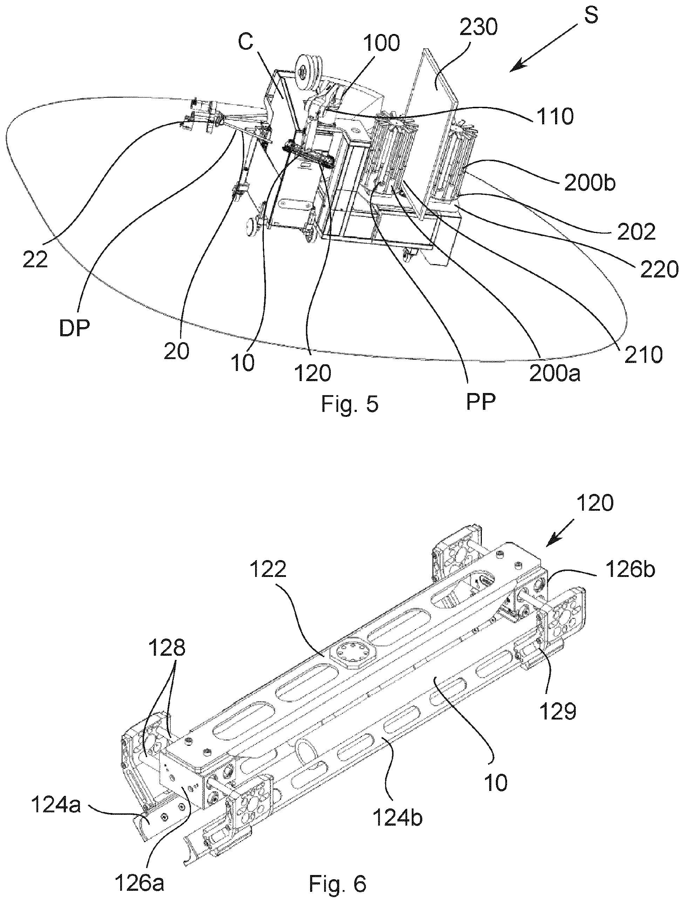

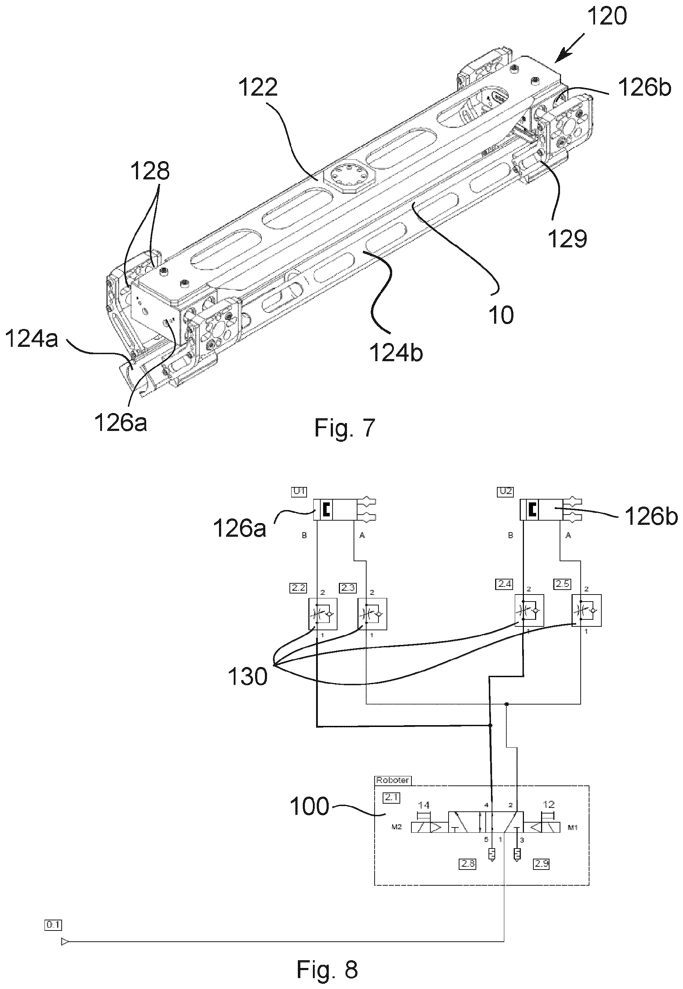

As can be best seen in Figs. 6 and 7, gripping device 120 comprises a longitudinal base structure 122 which is attached to handling device 110 of transporting apparatus 100, two gripper members 124a, 124b and two drive means 126 for reversibly moving gripper members 124a, 124b between a first position in which gripper members 124a, 124b are positioned on opposite sides of casing tube 10 to be picked up, and a second position in which gripper members 124a, 124b seize casing tube 10 to be picked up. Each drive means 126 is attached to a respective end of base structure 122 on its bottom surface.

Each gripper member 124a, 124b has a bottom surface and a top surface, wherein gripper members 124a, 124b of gripping device 120 are provided with inwardly curved gripping surfaces.

Drive means 126 are arranged on respective ends of gripper members 124a, 124b and mounted on the bottom surface of base structure 122. Each gripper member 124a, 124b is guided by two guide rods 128 on each side, which are arranged on respective ends of gripper member 124a, 124b and connected to drive means 126. According to this, guide rods 128 are not only used to linearly guide gripper members 124a, 124b, but also to drive gripper members 124a, 124b via drive means 126.

Further, drive means 126 are connected to gripper members 124a, 124b via a respective connecting bracket 129 having a curved shape. Curved bracket 129 extends downward away from drive means 126 to allow gripper members 124a, 124b to grip casing tube 20 without any restricting parts.

As can be further seen in Figs. 6 and 7, base structure122 and gripper members 124a, 124b comprise a plurality of through holes and oblong holes for reducing the weight of gripping device 120.

Fig. 8 shows a pneumatic plan of gripping device 120. As can be inferred from Fig. 8, a respective flow restrictor 130 is connected to inflow ends and outflow ends of drive means 126a, 126b. According to this, it is possible to keep the pressure of the fluid for actuating drive means 126a, 126b on a constant level. Thus, drive means 126a, 126b are capable of simultaneously moving gripper members 124a, 124b from a closed position into an opened position and vice versa.

### REFERENCE SIGNS

- C: clipping machine
- DP: delivering position
- F: fence
- LP: loading position
- PP: picking up position
- S: system
- WZ: working zone
- 10: casing tube or tubular casing material
- 20: filling tube
- 22: base segment
- 100: transporting apparatus
- 110: handling device
- 120: gripping device
- 122: base structure
- 124a, 124b: gripper member
- 126a, 126b: drive means
- 128: guide rods
- 129: bracket
- 130: flow restrictor
- 200, 200a, 200b: magazine
- 202: base
- 210: bar
- 220: framework
- 230: safety wall

## Claims

1. A gripping device (120) for picking up, conveying and delivering a casing tube (10) such as a casing tube (10) of a sausage, the gripping device (120) comprising:
a longitudinal base structure (122) which is attachable to a handling device (110) by means of a coupling element, preferably in a non-destructively detachable manner,
at least two gripper members (124a, 124b) having each at least one bottom surface and at least one top surface, wherein the gripper members (124a, 124b) of the gripping device (120) are provided with gripping surfaces,
at least one drive means (126a, 126b), for reversibly moving the gripper members (124a, 124b) between a first position in which the gripper members (124a, 124b) are positioned on opposite sides of the casing tube (10) to be picked up, and a second position in which the gripper members (124a, 124b) seize the casing tube (10) to be picked up, and
a control unit for simultaneously driving the drive means (126a, 126b) of the gripper members (124a, 124b),
**characterised in that** the gripping device (120) comprises
at least two drive means (126a, 126b), which are attached to the axial ends of the base structure (122),
wherein the drive means (126a, 126b) are driven pneumatically, and wherein the drive means (126a, 126b) are supplied by means of a compressed air supply via a common valve and respective conduits, and
wherein a respective flow restrictor (130) is connected to the drive means (126a, 126b) for compensating unsynchronized movements during opening and closing of the gripper members (124a, 124b) by the drive means (126a, 126b).

2. The gripping device (120) according to claim 1,
wherein the conduits from the common valve to the respective drive means (126a, 126b) are substantially of the same length.

3. The gripping device (120) according to claims 1 or 2,
wherein the respective flow restrictor (130) is connected to inflow ends and outflow ends of the drive means (126a, 126b).

4. The gripping device (120) according any of claims 1 to 3,
wherein at least one of the gripper members (124a, 124b) is translatory and/or rotatory movable with respect to the base structure (122).

5. The gripping device (120) according any of claims 1 to 4,
wherein each of the gripper members (124a, 124b) is guided by at least two guide rods (128).

6. The gripping device (120) according any of claims 1 to 5,
wherein at least one of the gripper members (124a, 124b) comprises a detection means which is capable of detecting the contact of the casing tube (10), wherein preferably two opposing gripper members (124a, 124b) comprise each a detection means.

7. The gripping device (120) according any of claims 1 to 6,
wherein the drive means (126a, 126b) are connected to the gripper members (124a, 124b) via at least one connecting bracket (129) having preferably a curved shape.

8. The gripping device (120) according any of claims 1 to 7,
wherein the base structure (122) and/or the at least two gripper members (124a, 124b) comprise a plurality of through holes and oblong holes for reducing the weight of the gripping device (120).

9. A system (S) for picking up, conveying and delivering a casing tube (10) such as a casing tube (10) of a sausage, the system (S) comprising:
a delivering bar (210) on which the respective casing tube (10) is stored,
a receiving bar (210) on which the respective casing tube (10) is to be inserted, and
a transporting apparatus (100) including a handling device (110) and a gripping device (120) according to any of claims 1 to 8 for conveying the casing tube (10) from the delivering bar (210) on the receiving bar (210).

10. The system according to claim 9,
wherein the system (S) further comprises at least one magazine (200) including a plurality of delivering bars (210), wherein the at least one magazine (200) is mounted on a framework (220), wherein preferably two magazines (200a, 200b) are arranged on the framework (220) opposite to each other.

11. The system according to claim 10,
wherein the framework (220) is rotatable and configured to rotate the at least one magazine (200) in a picking up position (PP) and a loading position (LP), respectively.

12. The system according to claim 10 or 11,
wherein the at least one magazine (200) comprises a plurality of substantially vertical delivering bars (210), wherein preferably the delivering bars (210) are arranged in a circle with a predefined distance to each other.

13. The system according to any of claims 10 to 12,
wherein the at least one magazine (200) is rotatable and configured to rotate one of the delivering bars (210) in the picking up position (PP).

14. The system according to any of claims 9 to 12,
wherein the gripping device (120) of the transporting apparatus (100) is configured to pick up a casing tube (10) from the delivering bar (210) and to deliver said casing tube (10) on the receiving bar (210) which is a filling tube (20) of a clipping machine (C).

15. The system according to claim 14,
wherein the transporting apparatus (100) is attached to the clipping machine (C), preferably on a back plate of the clipping machine (C) or on a top plate of the clipping machine (C).

## Patentansprüche

1. Greifvorrichtung (120) zum Aufnehmen, Befördern und Zuführen eines Hüllenschlauchs (10), wie z.B. eines Hüllenschlauches (10) für eine Wurst, wobei die Greifvorrichtung (120) umfasst:
eine longitudinale Basisstruktur (122), die mittels eines Kupplungselements, vorzugsweise in zerstörungsfrei lösbarer Weise, an einer Handhabungsvorrichtung (110) anbringbar ist,
wenigstens zwei Greiferelemente (124a, 124b), die jeweils wenigstens eine untere Oberfläche und wenigstens eine obere Oberfläche aufweisen, wobei die Greiferelemente (124a, 124b) der Greifvorrichtung (120) mit Greifflächen versehen sind,
wenigstens ein Antriebsmittel (126a, 126b) zum reversiblen Bewegen der Greiferelemente (124a, 124b) zwischen einer ersten Position, in der die Greiferelemente (124a, 124b) auf gegenüberliegenden Seiten des aufzunehmenden Hüllenschlauchs (10) positioniert sind, und einer zweiten Position, in der die Greiferelemente (124a, 124b) den aufzunehmenden Hüllenschlauch (10) ergreifen, und
eine Steuereinheit zum gleichzeitigen Antreiben der Antriebsmittel (126a, 126b) der Greiferelemente (124a, 124b),
**dadurch gekennzeichnet, dass** die Greifvorrichtung (120) wenigstens zwei Antriebsmittel (126a, 126b) umfasst, die an den axialen Enden der Basisstruktur (122) angebracht sind,
wobei die Antriebsmittel (126a, 126b) pneumatisch angetrieben werden, und wobei die Antriebsmittel (126a, 126b) mittels einer Druckluftversorgung über ein gemeinsames Ventil und entsprechende Leitungen versorgt werden, und
wobei ein jeweiliger Durchflussbegrenzer (130) mit den Antriebsmitteln (126a, 126b) verbunden ist, um unsynchronisierte Bewegungen während des Öffnens und Schließens der Greiferelemente (124a, 124b) durch die Antriebsmittel (126a, 126b) zu kompensieren.

2. Greifvorrichtung (120) nach Anspruch 1,
wobei die Leitungen von dem gemeinsamen Ventil zu den jeweiligen Antriebsmitteln (126a, 126b) im Wesentlichen die gleiche Länge aufweisen.

3. Greifvorrichtung (120) nach einem der Ansprüche 1 oder 2,
wobei der jeweilige Durchflussbegrenzer (130) mit den Einströmenden und Ausströmenden der Antriebsmittel (126a, 126b) verbunden ist.

4. Greifvorrichtung (120) nach einem der Ansprüche 1 bis 3,
wobei wenigstens eines der Greiferelemente (124a, 124b) translatorisch und/oder rotatorisch in Bezug auf die Basisstruktur (122) beweglich ist.

5. Greifvorrichtung (120) nach einem der Ansprüche 1 bis 4,
wobei jedes der Greiferelemente (124a, 124b) durch wenigstens zwei Führungsstangen (128) geführt wird.

6. Greifvorrichtung (120) nach einem der Ansprüche 1 bis 5,
wobei wenigstens eines der Greiferelemente (124a, 124b) ein Erfassungsmittel umfasst, das fähig ist, den Kontakt mit dem Hüllenschlauch (10) zu erfassen, wobei vorzugsweise zwei gegenüberliegende Greiferelemente (124a, 124b) jeweils ein Erfassungsmittel umfassen.

7. Greifvorrichtung (120) nach einem der Ansprüche 1 bis 6,
wobei die Antriebsmittel (126a, 126b) mit den Greiferelementen (124a, 124b) über wenigstens eine Verbindungsklammer (129) verbunden sind, die vorzugsweise eine gebogene Form aufweist.

8. Greifvorrichtung (120) nach einem der Ansprüche 1 bis 7,
wobei die Basisstruktur (122) und/oder die wenigstens zwei Greifelemente (124a, 124b) mehrere Durchgangslöcher und Langlöcher umfassen, um das Gewicht der Greifvorrichtung (120) zu reduzieren.

9. System (S) zum Aufnehmen, Befördern und Zuführen eines Hüllenschlauchs (10), wie z.B.
eines Hüllenschlauchs (10) einer Wurst, wobei das System (S) umfasst:
eine Abgabestange (210), auf der der jeweilige Hüllenschlauch (10) abgelegt ist,
eine Aufnahmestange (210), auf der der jeweilige Hüllenschlauch (10) aufgelegt werden soll, und
eine Transportvorrichtung (100) mit einer Handhabungsvorrichtung (110) und einer Greifvorrichtung (120) nach einem der Ansprüche 1 bis 8 zum Befördern des Hüllenschlauchs (10) von der Abgabestange (210) auf die Aufnahmestange (210).

10. System nach Anspruch 9,
wobei das System (S) ferner wenigstens ein Magazin (200) mit mehreren Abgabestangen (210) umfasst, wobei das wenigstens eine Magazin (200) an einem Rahmen (220) montiert ist, wobei vorzugsweise zwei Magazine (200a, 200b) an dem Rahmen (220) einander gegenüberliegend angeordnet sind.

11. System nach Anspruch 10,
wobei der Rahmen (220) drehbar ist und dazu konfiguriert ist, das wenigstens eine Magazin (200) in eine Aufnahmeposition (PP) bzw. eine Ladeposition (LP) zu drehen.

12. System nach Anspruch 10 oder 11,
wobei das wenigstens eine Magazin (200) mehrere im Wesentlichen vertikale Abgabestangen (210) umfasst, wobei die Abgabestangen (210) vorzugsweise in einem Kreis mit einem vordefinierten Abstand zueinander angeordnet sind.

13. System nach einem der Ansprüche 10 bis 12,
wobei das wenigstens eine Magazin (200) drehbar ist und dazu konfiguriert ist, eine der Abgabestangen (210) in die Aufnahmestellung (PP) zu drehen.

14. System nach einem der Ansprüche 9 bis 12,
wobei die Greifvorrichtung (120) der Transportvorrichtung (100) dazu konfiguriert ist, einen Hüllenschlauch (10) von der Abgabestange (210) aufzunehmen und den Hüllenschlauch (10) auf die Aufnahmestange (210) abzugeben, die ein Füllrohr (20) einer Clipmaschine (C) ist.

15. System nach Anspruch 14,
wobei die Transportvorrichtung (100) an der Clipmaschine (C) angebracht ist, vorzugsweise an einer hinteren Platte der Clipmaschine (C) oder an einer oberen Platte der Clipmaschine (C).

## Revendications

1. Dispositif de préhension (120) destiné à saisir, transporter et distribuer un tube d'enveloppe (10) tel qu'un tube d'enveloppe (10) d'une saucisse, le dispositif de préhension (120) comprenant :
une structure de base (122) longitudinale qui peut être attachée à un dispositif de manipulation (110) au moyen d'un élément d'accouplement, de préférence de manière détachable, non destructive,
au moins deux éléments de préhension (124a, 124b) présentant chacun au moins une surface inférieure et au moins une surface supérieure, les éléments de préhension (124a, 124b) du dispositif de préhension (120) étant pourvus de surfaces de préhension,
au moins un moyen d'entraînement (126a, 126b), destiné à déplacer de manière réversible les éléments de préhension (124a, 124b) entre une première position dans laquelle les éléments de préhension (124a, 124b) sont positionnés sur des côtés opposés du tube d'enveloppe (10) à saisir et une seconde position dans laquelle les éléments de préhension (124a, 124b) s'emparent du tube d'enveloppe (10) à saisir et
une unité de commande destinée à entraîner simultanément les moyens d'entraînement (126a, 126b) des éléments de préhension (124a, 124b),
**caractérisé en ce que** le dispositif de préhension (120) comprend
au moins deux moyens d'entraînement (126a, 126b), qui sont attachés aux extrémités axiales de la structure de base (122),
les moyens d'entraînement (126a, 126b) étant entraînés pneumatiquement et
les moyens d'entraînement (126a, 126b) étant alimentés au moyen d'une alimentation en air comprimé par l'intermédiaire d'une vanne commune et de conduits respectifs et
un réducteur de débit (130) respectif étant relié au moyen d'entraînement (126a, 126b) et destiné à compenser des mouvements non synchronisés pendant l'ouverture et la fermeture des éléments de préhension (124a, 124b) par le moyen d'entraînement (126a, 126b).

2. Dispositif de préhension (120) selon la revendication 1,
les conduits allant de la vanne commune aux moyens d'entraînement (126a, 126b) respectifs étant sensiblement de même longueur.

3. Dispositif de préhension (120) selon les revendications 1 ou 2,
le réducteur de débit (130) respectif étant relié à des extrémités d'entrée et à des extrémités de sortie des moyens d'entraînement (126a, 126b).

4. Dispositif de préhension (120) selon l'une quelconque des revendications 1 à 3,
au moins l'un des éléments de préhension (124a, 124b) étant mobile en translation et/ou en rotation par rapport à la structure de base (122).

5. Dispositif de préhension (120) selon l'une quelconque des revendications 1 à 4,
chacun des éléments de préhension (124a, 124b) étant guidé par au moins deux tiges de guidage (128).

6. Dispositif de préhension (120) selon l'une quelconque des revendications 1 à 5,
au moins l'un des éléments de préhension (124a, 124b) comprenant un moyen de détection qui est apte à détecter le contact du tube d'enveloppe (10), de préférence deux éléments de préhension (124a, 124b) opposés comprenant chacun un moyen de détection.

7. Dispositif de préhension (120) selon l'une quelconque des revendications 1 à 6,
les moyens d'entraînement (126a, 126b) étant reliés aux éléments de préhension (124a, 124b) par l'intermédiaire d'au moins un support de liaison (129) présentant de préférence une forme incurvée.

8. Dispositif de préhension (120) selon l'une quelconque des revendications 1 à 7,
la structure de base (122) et/ou lesdits au moins deux éléments de préhension (124a, 124b) comprenant une pluralité de trous traversants et de trous oblongs destinés à réduire le poids du dispositif de préhension (120).

9. Système (S) destiné à saisir, transporter et distribuer un tube d'enveloppe (10) tel qu'un tube d'enveloppe (10) d'une saucisse, le système (S) comprenant :
une barre de distribution (210) sur laquelle le tube d'enveloppe (10) respectif est stocké,
une barre de réception (210) sur laquelle le tube d'enveloppe (10) respectif doit être inséré et
un appareil de transport (100) comprenant un dispositif de manipulation (110) et un dispositif de préhension (120) selon l'une quelconque des revendications 1 à 8, destiné à transporter le tube d'enveloppe (10) à partir de la barre de distribution (210) sur la barre de réception (210).

10. Système selon la revendication 9,
le système (S) comprenant en outre au moins un magasin (200) comprenant une pluralité de barres de distribution (210), ledit au moins un magasin (200) étant monté sur un cadre (220), de préférence deux magasins (200a, 200b) étant agencés sur le cadre (220) à l'opposé l'un de l'autre.

11. Système selon la revendication 10,
le cadre (220) étant rotatif et conçu pour faire tourner ledit au moins un magasin (200) respectivement dans une position de saisie (PP) et une position de chargement (LP).

12. Système selon la revendication 10 ou 11,
ledit au moins un magasin (200) comprenant une pluralité de barres de distribution (210) sensiblement verticales, les barres de distribution (210) étant de préférence agencées en un cercle à une distance prédéfinie les unes par rapport aux autres.

13. Système selon l'une quelconque des revendications 10 à 12,
ledit au moins un magasin (200) étant rotatif et conçu pour faire tourner l'une des barres de distribution (210) dans la position de saisie (PP).

14. Système selon l'une quelconque des revendications 9 à 12,
le dispositif de préhension (120) de l'appareil de transport (100) étant conçu pour saisir un tube d'enveloppe (10) à partir de la barre de distribution (210) et pour distribuer ledit tube d'enveloppe (10) sur la barre de réception (210) qui est un tube de remplissage (20) d'une machine d'agrafage (C).

15. Système selon la revendication 14,
l'appareil de transport (100) étant attaché à la machine d'agrafage (C), de préférence sur une plaque arrière de la machine d'agrafage (C) ou sur une plaque supérieure de la machine d'agrafage (C).
